# EUROPÄISCHE PATENTSCHRIFT

(11) **EP 2 689 965 B1**
(45) Veröffentlichungstag und Bekanntmachung des Hinweises auf die Patenterteilung: **08.04.2020**
(21) Anmeldenummer: 13002882.2
(22) Anmeldetag: 05.06.2013
(51) Int. Cl.: B60Q 1/00, B60Q 1/14

(54) **Bedienstelle und Verfahren zur Betätigung von Lichtfunktionen**
Control point and method for actuating of light functions
Poste de commande et procédé d'actionnement de fonctions lumineuses

(30) Priorität: 25.07.2012 DE 102012014761
(43) Veröffentlichungstag der Anmeldung: 29.01.2014
(73) Patentinhaber: AUDI AG, 85045 Ingolstadt (DE)
(72) Erfinder: Hartmann, Jürgen, 91468 Gutenstetten (Pahres) (DE); Stüber, Andreas, 85122 Hofstetten (DE); Saßmannshausen, Patrick, 85276 Hettenshausen (DE)
(74) Vertreter: Thielmann, Frank

(56) Entgegenhaltungen:
- WO-A1-2011/072828
- DE-A1- 1 814 768
- DE-A1- 1 962 093
- DE-A1-102011 117 245
- FR-A1- 2 502 558
- GB-A- 2 476 169
- JP-A- 2000 313 275
- JP-A- 2002 002 370
- US-A- 3 876 904
- Skoda Auto A.S.: "SKODA Octavia BETRIEBSANLEITUNG", , 1 May 2011 (2011-05-01), XP055592034, Retrieved from the Internet: URL:http://ws.skoda-auto.com/OwnersManualS ervice/Data/de/Octavia_1Z/05-2011/Manual/O ctavia/A5_Octavia_OwnersManual.pdf [retrieved on 2019-05-27]

## Beschreibung

Die Erfindung betrifft ein Verfahren, eine Bedienvorrichtung sowie ein Fahrzeug mit einer Bedienvorrichtung zur Steuerung von Lichtfunktionen, wobei zwischen den Lichtfunktionen umgeschaltet werden kann.

Moderne Fahrzeuge verfügen über Fahrerassistenzsysteme, die den Fahrer warnen, wenn er sich z.B. noch nicht angeschnallt hat oder wenn das Benzin zur Neige geht. Weiterentwickelte Systeme können den Fahrer bereits davor warnen, dass sich eine Gefahr außerhalb des Fahrzeugs befindet und zeigen an bzw. warnen mittels eines Signaltons oder eines Anzeigelichts, wenn sich z.B. Fußgänger auf einer unbeleuchteten Straße befinden.

Die neuesten Entwicklungen gehen dahin, dass die Fahrerassistenzsysteme dem Fahrer noch mehr Arbeit beim Fahren abnehmen. Diese Systeme erkennen z.B. nicht nur, dass die Umgebung dunkel ist, sondern auch, dass sich das Fahrzeug in einer Kurve befindet und eine gewisse Geschwindigkeit gefahren wird, woraufhin der Lichtkegel des Lichts vom Fahrerassistenzsystem entsprechend angepasst wird, d.h. dass z.B. auf der linken Seite des Autos der Lichtkegel vergrößert wird, so dass der Fahrbahnrand besser ausgeleuchtet wird.

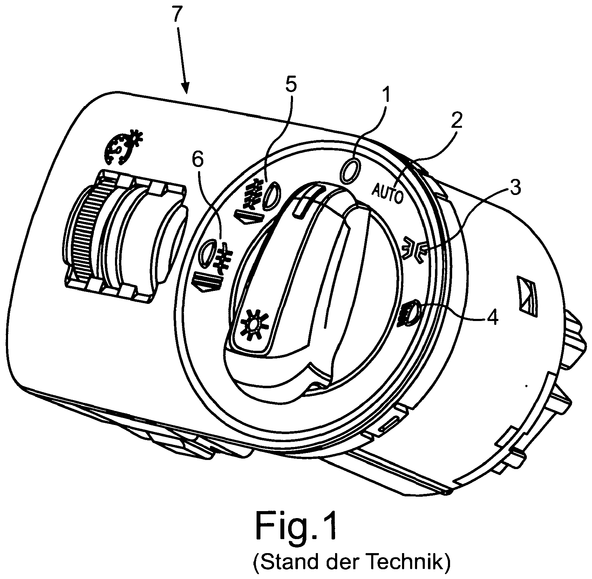

Das setzt voraus, dass der Fahrer das Abblendlicht eingeschaltet hat. Dies kann beispielsweise dadurch erfolgen, dass der Fahrer die Funktion "Auto" gewählt hat, bei der das (Abblend-)Licht automatisch abhängig von den äußeren Umweltbedingungen ein- bzw. ausgeschaltet wird. Die Einstellung erfolgt z.B. mittels eines Lichtdrehschalters, bei dem über einen Drehknopf zwischen verschiedenen Modi gewechselt werden kann. Typische Modi sind dabei "Licht aus" 1, "Auto" 2, "Standlicht" 3, "Abblendlicht" 4 und "Abblendlicht + Nebellicht" 4 mit 5 oder 6. Solche Lichtdrehschalter sind häufig in einem Lichtdrehschalter-Modul 7 wie in Fig. 1 gezeigt integriert und aus dem Stand der Technik bekannt. Andere Arten eines Lichtdrehschalters sind ebenfalls bekannt, z.B. ein Lichtdrehschalter, der am Lenkrad angebracht ist.

Wenn der Fahrer des Fahrzeugs den Lichtdrehschalter auf die Stellung "Auto" 2 gedreht hat, muss er sich nicht mehr um das (Abblend-)Licht kümmern, da es entsprechend den aktuellen Umweltbedingungen automatisch aktiviert oder deaktiviert wird.

Problematisch wird es allerdings, wenn der Fahrer in der Stellung "Auto" 2 während einer Nachtfahrt bzw. bei solchen Bedingungen, bei denen das Abblendlicht eingeschaltet ist, die Nebelleuchten einschalten will oder muss.

Dazu muss der Drehschalter von "Auto" 2 auf "Abblendlicht + Nebellicht" 4 mit 5 oder 6 geschaltet werden. Dies geschieht bei Lichtdrehschaltern, wie sie in Fig. 1 gezeigt sind, indem der Drehschalter von der Stellung "Auto" 2 über die Stellung "Standlicht" 3 hin zu der Stellung "Abblendlicht" 4 gedreht wird und dann herausgezogen wird.

Das Problem dabei ist, dass sich zwischen den Positionen "Auto" 2 und "Abblendlicht" 4 bzw. "Abblendlicht + Nebellicht" 4 mit 5 oder 6 die Position "Standlicht" 3 befindet, was vom Gesetzgeber so vorgeschrieben ist. Das heißt, dass vor der Aktivierung des Abblendlichts das Standlicht aktiviert werden muss, eine umgekehrte Reihenfolge ist nicht erlaubt.

Diese Vorschrift führt zu dem Problem, dass wenn während des Fahrens von der Stellung "Auto" 2 auf "Abblendlicht" 4 bzw. "Abblendlicht + Nebellicht" 4 mit 5 oder 6 umgeschaltet werden soll, das Umschalten in jedem Fall über die Funktion "Standlicht" 3 geschieht, d.h. dass das Standlicht beim Umschalten aktiviert wird.

Wenn nun während des Fahrens der Lichtdrehschalter auf der Funktion "Auto" 2 steht und das Abblendlicht bereits automatisch eingeschaltet ist, da es z.B. die Lichtverhältnisse erfordern, führt das Umschalten von "Auto" 2 auf "Abblendlicht" 4 bzw. "Abblendlicht + Nebellicht" 4 mit 5 oder 6 zwangsläufig dazu, dass das Standlicht aktiviert wird, d.h. dass das bereits aktive (relativ helle) Abblendlicht auf das wesentlich dunklere Standlicht reduziert wird. Dies führt dazu, dass die Sicht sehr stark vermindert wird, wenn der Fahrer nicht schnell genug von "Auto" 2 auf "Abblendlicht" 4 bzw. "Abblendlicht + Nebellicht" 4 mit 5 oder 6 umschaltet. Dies kann zu gefährlichen Situationen führen.

Die DE 1 814 768 beschreibt eine elektrische Schaltanordnung für Fahrzeuge, insbesondere für Kraftfahrzeuge, mit einem mehrstufigen Lichtschalter, dessen erste Stufe den Begrenzungsleuchten und dessen zweite Stufe den Scheinwerfern zugeordnet ist, und mit einem Umschalter für Fern- und Abblendlicht sowie einer z.B. von der Tachometerwelle abhängigen Kontakteinrichtung, wobei bei eingeschalteten Begrenzungsleuchten und anfahrendem Fahrzeug zwangsläufig ein selbsttätiges Einschalten der Abblendlichtlampen bewirkt und bei fahrendem Fahrzeug beibehalten wird. Ähnliche Vorrichtungen werden in der US 3,876,904 und der FR 2 502 558 beschrieben.

Die DE 1 962 093 hat eine Beleuchtungsanlage für Kraftfahrzeuge mit einer Standlichtlampe und einer Abblendlichtlampe zum Gegenstand, wobei die Beleuchtungsanlage einen in Abhängigkeit vom Betriebszustand des Motors des Kraftfahrzeuges gesteuerten Schalter umfasst, der bei laufendem Motor zur eingeschalteten Standlichtlampe automatisch die Abblendlichtlampe hinzuschaltet.

Aus der JP 2000/313275 A ist eine Beleuchtungsanlage für Kraftfahrzeuge bekannt, die einen Geschwindigkeitssenor zum Erfassen der Fahrzeuggeschwindigkeit, einen am Fahrzeug montierten Helligkeitssensor zum Erfassen der Helligkeit in der Umgebung des Fahrzeugs, und eine Steuereinrichtung aufweist, die einen Steuerbefehl zum zwangsweisen Einschalten des Fahrlichts ausgibt, wenn die mit dem Geschwindigkeitssensor erfasste Fahrzeuggeschwindigkeit oberhalb eines vorgegebenen Werts beträgt und die mit dem Helligkeitssensor erfasste Helligkeit niedriger als ein vorgegebener Wert wird.

Die JP 2002/002370 A beschreibt eine Steuereinrichtung für das Fahrlicht eines Fahrzeugs mit einem Geschwindigkeitssensor zur Erfassung der Geschwindigkeit des Fahrzeugs, einem Lichtschalter zum Ein-/Ausschalten des Fahrlichts, einem Druckschalter zum Ein-/Ausschalten des Fahrlichts, wobei der Druckschalter nur bei einem Stillstand des Fahrzeugs Vorrang gegenüber dem Lichtschalter hat, und einem Vergessen-Verhindern-Steuerteil zum Einschalten des Fahrlichts, wenn das Fahrzeug anfängt, sich aus dem Stillstand heraus zu bewegen und das Fahrlicht ausgeschaltet ist.

Die GB 2 476 169 A hat ein Verfahren zum Beleuchten einer Umgebung eines Fahrzeugs während einer Off-Road-Bergabfahrt zum Gegenstand, wobei das Fahrzeug wenigstens eine Steuereinrichtung für eine Bergabfahrt aufweist. Wenigstens ein Fahrlicht des Fahrzeugs wird automatisch zusammen mit der Aktivierung der Steuereinrichtung derart eingeschaltet, dass die von dem wenigstens einen Fahrlicht emittierte Lichtintensität erhöht wird.

Und aus der DE 10 2011 117 245 A1 ist eine Vorrichtung zum Ansteuern der Lichteinrichtung eines Fahrzeugs bekannt, wobei mittels einer Bedienvorrichtung eine Gelände-Lichtverteilung einstellbar ist, welche für das Befahren von Gelände außerhalb von Verkehrsstraßen angepasst ist, wobei sich die Gelände-Lichtverteilung von einer für Verkehrsstraßen gewählten Lichtverteilung unterscheidet, wobei die Gelände-Lichtverteilung gegenüber einer Lichtverteilung für Verkehrsstraßen über eine breitere Lichtverteilung oder über eine bessere Rundumbeleuchtung oder eine erhöhte Licht/Leuchtleistung der Scheinwerfer oder Leuchten verfügt.

Gemäß den technischen Lehren der letzten beiden Druckschriften kann die Aktivierung/Deaktivierung der veränderten Lichtverteilung in Abhängigkeit von einem Unterschreiten/Überschreiten einer vorgebbaren Geschwindigkeit des Fahrzeugs erfolgen.

Das Dokument "SKODA Octavia Betriebsanleitung", SKODA AUTO a.s., 2011 beschreibt einen Lichtschalter eines Kraftfahrzeugs in der Stellung "AUTO", die eine automatische Fahrlichtsteuerung anzeigt. Um diese zu deaktivieren, kann der Lichtschalter beispielsweise in die Stellung "Abblendlicht" gedreht werden und optional der Nebelscheinwerfer eingeschaltet werden, indem der Lichtschalter in der Stellung "Abblendlicht" herausgezogen wird. Die Stellung "Standlicht" befindet sich zwischen "AUTO" und "Abblendlicht".

Deshalb ist es eine Aufgabe der Erfindung, ein Verfahren zum Einstellen von Lichtfunktionen bereitzustellen, das die oben genannte Problematik verhindert, d.h. ein Verfahren bereitzustellen, das die Sicherheit beim Fahren weiter erhöht. Des Weiteren soll eine entsprechende Bedienvorrichtung und ein entsprechendes Fahrzeug bereitgestellt werden.

Diese Aufgabe wird in einem Aspekt durch ein Verfahren mit den Merkmalen gemäß Patentanspruch 1 und in einem anderen Aspekt durch eineine Bedienvorrichtung gemäß Patentanspruch 2 gelöst. Ferner nutzt ein Fahrzeug gemäß Patentanspruch 6 die Bedienvorrichtung. Vorteilhafte Ausführungsformen werden in den entsprechenden Unteransprüchen definiert.

Bei dem erfindungsgemäßen Verfahren zur Steuerung von Lichtfunktionen in einem Fahrzeug kann zwischen unterschiedlichen Lichtfunktionen umgeschaltet werden, wobei beim Umschalten von einer aktuellen aktiven Lichtfunktion auf eine andere Lichtfunktion eine aktuelle Geschwindigkeit des Fahrzeugs für das Aktivieren dieser anderen Lichtfunktion berücksichtigt wird.

Durch das erfindungsgemäße Verfahren, die entsprechende Bedienvorrichtung und das entsprechende Fahrzeug mit einer Bedienvorrichtung und einem Steuergerät wird es möglich, das Problem der vorliegenden Erfindung zu lösen.

Speziell wird die Sicherheit beim Fahren weiter dadurch erhöht, dass ein Verfahren bereitgestellt wird, das es ermöglicht, ein automatisches Steuern des Ein- bzw. Ausschaltens von Lichtfunktionen durchzuführen. Somit wird während der Fahrt, vor allem bei Bedingungen, bei denen das Abblendlicht benötigt wird, gewährleistet, dass sich die Sicht nicht durch ein Umschalten auf eine andere Lichtfunktion verschlechtert und so ein erhöhtes Gefahrenpotential für einen Unfall entsteht.

Erfindungsgemäß bleibt, wenn beim Umschalten von der aktuellen aktiven Lichtfunktion auf die andere Lichtfunktion die aktuelle Geschwindigkeit des Fahrzeugs eine vorbestimmte Geschwindigkeit überschritten hat, die aktuelle Lichtfunktion aktiv und die andere Lichtfunktion, auf die umgeschaltet wird, wird nicht aktiviert. Der Vorteil dabei ist, dass die Geschwindigkeit des Fahrzeugs derart berücksichtigt wird, dass bei Überschreiten einer vorbestimmten Geschwindigkeit die aktuell eingestellt Lichtfunktion aktiv bleibt, auch wenn eine andere Lichtfunktion angefordert wird, was zur zusätzlichen Erhöhung der Sicherheit beim Fahren beiträgt.

Die aktuelle Lichtfunktion ist erfindungsgemäß die Funktion "Auto", bei der abhängig von den vorhandenen Umweltbedingungen das Abblendlicht automatisch eingeschaltet wird, und das Abblendlicht aktiv ist. Bei eingestellter Funktion "Auto" und eingeschaltetem Abblendlicht geschieht kein Umschalten auf eine andere Lichtfunktion "Standlicht", wenn die vorbestimmte Geschwindigkeit überschritten ist. Dies führt dazu, dass die Sicht nicht verschlechtert wird, auch wenn ein Umschalten auf eine Lichtfunktion erfolgt, die zu verminderter Sicht führen würde. Andernfalls wird das Standlicht aktiviert.

Die Lichtfunktionen umfassen die Funktionen "Aus", "Auto", "Standlicht", "Abblendlicht" und "Abblendlicht + Nebellicht". Die oben beschriebene Anordnung der Lichtfunktionen ist vorteilhaft im Hinblick auf die gesetzlichen Vorschriften und die Bedienung zum Ein- bzw. Ausschalten des Lichts im Fahrzeug.

Die obige Aufgabe wird ferner durch eine Bedienvorrichtung, bei der das obige Verfahren durchgeführt wird, gelöst.

Erfindungsgemäß erfolgt das Umschalten von der aktuellen Lichtfunktion auf die andere Lichtfunktion mittels eines Drehschalters.

Bevorzugt ist die Bedienvorrichtung als ein Drehschalter-Modul ausgebildet.

Des Weiteren weist die Bedienvorrichtung ein Steuergerät auf, das dazu eingerichtet ist, die aktuelle Schalterstellung und/oder die aktuelle Geschwindigkeit des Fahrzeugs auszuwerten.

In einem weiteren Aspekt der vorliegenden Erfindung weist ein Fahrzeug die oben beschriebene Bedienvorrichtung auf.

Nachfolgend wird die Erfindung unter Bezugnahme auf die Zeichnungen näher beschrieben, wobei
- Fig. 1: eine Darstellung eines aus dem Stand der Technik bekannten Lichtdrehschalter-Moduls ist, das auch erfindungsgemäß verwendet werden kann; und
- Fig. 2: ein Ablaufdiagramm des erfindungsgemäßen Verfahrens darstellt.

Fig. 1 ist eine Darstellung eines aus dem Stand der Technik bekannten Lichtdrehschalter-Moduls 7, bei dem mittels eines Drehschalters zwischen unterschiedlichen Modi umgeschaltet werden kann, welche z.B. "Licht aus" 1, "Auto" 2, "Standlicht" 3, "Abblendlicht" 4 und "Abblendlicht + Nebellicht" 4 mit 5 oder 6 sind.

Das in Fig. 1 dargestellte und oben bereits beschriebene Lichtdrehschalter-Modul 7 kann auch als die erfindungsgemäße Bedienvorrichtung verwendet werden.

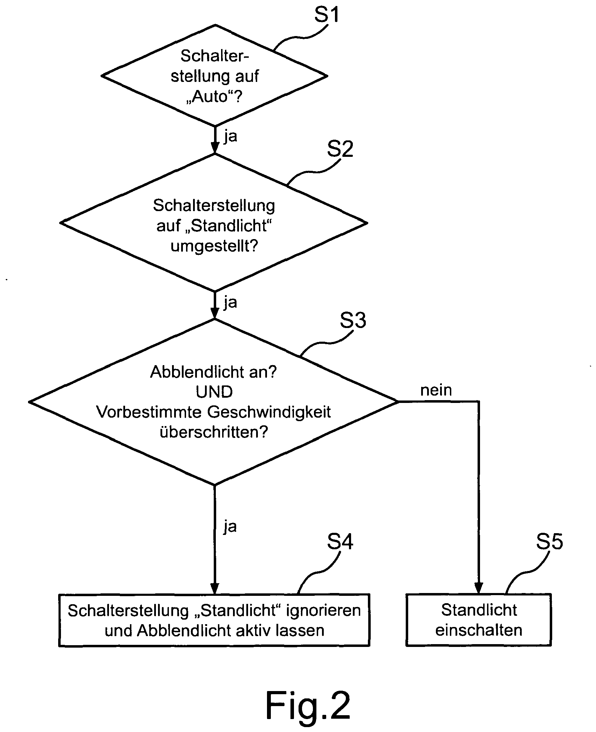

In Fig. 2 wird das erfindungsgemäße Verfahren schematisch als Ablaufdiagramm dargestellt.

Grundvoraussetzung ist, dass die Lichtfunktion "Auto" 2 eingestellt ist. Dies wird in Schritt S1 geprüft. Wenn nun in Schritt S2 erkannt wird, dass von dieser Stellung auf die Lichtfunktion "Standlicht" 3 umgeschaltet wird, und zusätzlich in Schritt S3 erkannt wird, dass das Abblendlicht aufgrund der Umgebungsbedingungen aktiv ist und außerdem eine vorbestimmte Grenzgeschwindigkeit überschritten ist, dann wird in Schritt S4 das Standlicht nicht aktiviert, d.h. nicht eingeschaltet. Andernfalls wird in Schritt S5 das Standlicht eingeschaltet.

Das heißt, dass die Schalterstellung "Standlicht" 3 bei eingeschaltetem Abblendlicht und Überschreiten der vorbestimmten Geschwindigkeit ignoriert wird und das Abblendlicht aktiv bleibt, obwohl durch das Umschalten, also durch die aktuelle Schalterstellung, das Aktivieren des Standlichts gefordert wäre.

Wie bereits oben erwähnt, ist gesetzlich vorgeschrieben, dass vor der Aktivierung des Abblendlichts das Standlicht aktiviert werden muss. Um dieser Vorschrift gerecht zu werden, ist die Reihenfolge der Lichtfunktionen zum Beispiel "Auto" 2, "Standlicht" 3, "Abblendlicht" 4, "Abblendlicht + Nebellicht" 4 mit 5 oder 6, wobei die Reihenfolge nicht darauf festgelegt ist, solange die gesetzlichen Vorschriften eingehalten werden. Auch können durchaus weitere Lichtfunktionen außer den oben genannten vorhanden sein.

Eine Bedienvorrichtung, mit der zwischen unterschiedlichen Lichtfunktionen umgeschaltet werden kann, ermöglicht die Durchführung des erfindungsgemäßen Verfahrens.

Bei der erfindungsgemäßen Bedienvorrichtung kann vorzugsweise zwischen den Lichtfunktionen "Aus" 1, "Auto" 2, "Standlicht" 3, "Abblendlicht" 4 und "Abblendlicht + Nebellicht" 4 mit 5 oder 6 umgeschaltet werden, wobei die oben genannten gesetzlichen Vorschriften bezüglich der Anordnungsreihenfolge der Lichtfunktionen zu beachten sind. Weitere Lichtfunktionen können entsprechend hinzugefügt werden.

Ferner kann die erfindungsgemäße Bedienvorrichtung vorzugsweise einen Drehschalter aufweisen. Andere Arten von Schaltern (z.B. Tippschalter) sind ebenfalls nicht ausgeschlossen.

Die erfindungsgemäße Bedienvorrichtung kann auch als ein Drehschalter-Modul 7 wie z.B. in Fig. 1 gezeigt, ausgebildet sein. Dabei ist ein Modul ein leicht austauschbares einteiliges Element, sozusagen ein Baustein, der bzw. das über entsprechende Schnittstellen mit anderen Modulen oder Funktionalitäten im Fahrzeug interagieren kann. Ein großer Vorteil ist, dass alte Module leicht durch neue Module ersetzt werden können, sei es weil es neuere Ausführungen gibt oder weil ein defektes Modul ausgetauscht werden muss. Auch können neue Module relativ leicht zum Ganzen hinzugefügt werden, da genormte Schnittstellen dafür zur Verfügung stehen.

Ferner kann die erfindungsgemäße Bedienvorrichtung ein Steuergerät aufweisen, das dazu eingerichtet ist, die aktuelle Schalterstellung und/oder die aktuelle Geschwindigkeit des Fahrzeugs auszuwerten. Das Steuergerät kann so ausgebildet sein, dass es die aktuelle Schalterstellung und/oder die aktuelle Geschwindigkeit empfängt, auswertet und dann den entsprechenden Befehl zum Aktivieren oder Nicht-Aktivieren des Standlichts ausgibt. Das Steuergerät kann aber auch so ausgebildet sein, dass es die aktuelle Schalterstellung und/oder die aktuelle Geschwindigkeit selbst erkennt, auswertet und dann den entsprechenden Befehl zum Aktivieren oder Nicht-Aktivieren des Standlichts ausgibt.

Des Weiteren kann ein Fahrzeug die erfindungsgemäße Bedienvorrichtung aufweisen, wobei die erfindungsgemäße Bedienvorrichtung das oben beschriebene Steuergerät teilweise oder komplett aufweisen kann. Auch kann ein Fahrzeug die erfindungsgemäße Bedienvorrichtung ohne das oben beschriebene Steuergerät aufweisen, und zusätzlich ein nicht zur Bedienvorrichtung gehörendes Steuergerät zur Auswertung, ob das Standlicht aktiviert wird oder nicht, aufweisen.

Das Steuergerät kann zusammen mit der Bedienvorrichtung in z.B. einem Lichtdrehschalter-Modul angebracht sein, es kann aber auch nur teilweise zu der Bedienvorrichtung gehören oder komplett unabhängig von der Bedienvorrichtung im Fahrzeug angebracht sein, z.B. in Verbindung mit einem anderen Steuergerät oder als Teil eines anderen Steuergeräts. Das Steuergerät muss lediglich so angeordnet sein, dass es sowohl die Schalterstellung, also die angeforderte Lichtfunktion, als auch die Fahrzeuggeschwindigkeit auswerten kann und die entsprechenden Befehle zum Ein- bzw. Ausschalten der Lichtfunktionen, also z.B. des Standlichts oder des Abblendlichts, weitergeben oder ausführen kann.

Wenn also das Steuergerät erkennt, dass vom Fahrer von der Stellung "Auto" 2 auf die Stellung "Standlicht" 3 gedreht ist und zusätzlich von dem Steuergerät erkannt ist, dass eine vorbestimmte Geschwindigkeit überschritten ist sowie das Abblendlicht, z.B. aufgrund von Umweltbedingungen, aktiv ist, dann bestimmt das Steuergerät, dass das Abblendlicht aktiv bleibt, d.h. dass das Standlicht nicht eingeschalten wird, obwohl es die aktuelle Anforderung der Lichtfunktion, also die aktuelle Schalterstellung, eigentlich fordern würde. Das heißt, dass die Schalterstellung "Standlicht" 3 in diesem Fall ignoriert wird.
oder zweimal herausgezogen werden. Bei einmaligem Herausziehen 5 wird in der Regel die Nebelschlussleuchte eingeschaltet und bei zweimaligem Herausziehen 6 wird zusätzlich der Nebelscheinwerfer angeschaltet.

Dabei muss der Fahrer den Schalter aber zwangsläufig, weil gesetzlich vorgeschrieben, über die Stellung "Standlicht" 3 drehen. Da bei Umgebungsbedingungen, die ein Einschalten des Nebellichts erfordern, das Abblendlicht höchstwahrscheinlich an ist, wenn die Stellung "Auto" 2 eingestellt ist, würde ein Drehen des Schalters über die Stellung "Standlicht" 3 dazu führen, dass dieses aktiviert würde. Dabei würde das Abblendlicht abgedunkelt und der Fahrer hätte mit verminderter Sicht zu kämpfen, je nachdem wie lange er die Stellung "Standlicht" 3 beibehält.

Dies ist eine gefährliche Situation, da der Fahrer z.B. verunsichert oder irritiert sein könnte und den Schalter nicht weiter dreht, ihn also evtl. auf der Funktion "Standlicht" 3 belässt, so dass die Sicht weiterhin beeinträchtigt bleibt. Dies wird durch die vorliegende Erfindung verhindert. Hier wird nämlich, wenn die Schalterstellung "Auto" 2 ursprünglich eingestellt ist und von dieser Stellung umgeschaltet wird und das Abblendlicht aktiv ist sowie eine vorbestimmte Geschwindigkeit überschritten ist, das Abblendlicht immer aktiv bleiben, d.h. die Schalterstellung "Standlicht" 3 wird ignoriert, so dass kein Abdunkeln erfolgt und der Fahrer so weder irritiert wird, noch die Sicht vermindert wird.

## Patentansprüche

1. Verfahren zur Steuerung von unterschiedlichen Lichtfunktionen (1 bis 6) in einem Fahrzeug, wobei die Lichtfunktionen (1 bis 6) die Funktionen "Aus" (1), "Auto" (2), "Standlicht" (3), "Abblendlicht" (4) und "Abblendlicht + Nebellicht" (4 mit 5 oder 6) umfassen und zwischen den Lichtfunktionen (1 bis 6) mittels eines Drehschalters manuell umgeschaltet werden kann, wobei zwischen der Schalterposition "Auto" (2) und der Schalterposition "Abblendlicht" (4) die Schalterposition "Standlicht" (3) angeordnet ist,
**dadurch gekennzeichnet, dass**
wenn beim manuellen Umschalten von der aktuellen Lichtfunktion "Auto" (2), bei der abhängig von den vorhandenen Umweltbedingungen das Abblendlicht automatisch eingeschaltet wird, und das Abblendlicht eingeschaltet ist, auf die Lichtfunktion "Standlicht" (3) die aktuelle Geschwindigkeit des Fahrzeugs eine vorbestimmte Geschwindigkeit überschritten hat, das Abblendlicht eingeschaltet bleibt und die Schalterposition "Standlicht" (3) ignoriert wird und andernfalls das Standlicht aktiviert wird.

2. Bedienvorrichtung zum Steuern von Lichtfunktionen (1 bis 6) in einem Fahrzeug, wobei für das Umschalten der Lichtfunktionen (1 bis 6) ein Drehschalter vorgesehen ist,
**dadurch gekennzeichnet dass**,
die Bedienvorrichtung ein Steuergerät aufweist, das dazu eingerichtet ist, die aktuelle Schalterstellung und die aktuelle Geschwindigkeit des Fahrzeugs auszuwerten sowie das Steuern gemäß dem Verfahren nach Anspruch 1 durchzuführen.

3. Bedienvorrichtung nach Anspruch 2, die als ein Drehschalter-Modul (7) ausgebildet ist.

4. Fahrzeug mit einer Bedienvorrichtung nach einem der Ansprüche 2 oder 3.

## Claims

1. Method for controlling different light functions (1 to 6) in a vehicle, wherein the light functions (1 to 6) comprise the "Off" (1), "Auto" (2), "Parking light" (3), "Low beam" (4) and "Low beam + fog light" (4 with 5 or 6) functions and it is possible to switch manually between the light functions (1 to 6) using a rotary switch, wherein the "Parking light" (3) switch position is arranged between the "Auto" (2) switch position and the "Low beam" (4) switch position,
**characterised in that**
if, when switching from the current "Auto" (2) light function, in which the low beam is automatically switched on depending on the existing environmental conditions, and the low beam is switched on, to the "Parking light" (3) light function, the current speed of the vehicle has exceeded a predetermined speed, the low beam remains switched on and the "parking light" (3) position is ignored, and otherwise the parking light is activated.

2. Operating device for controlling light functions (1 to 6) in a vehicle, wherein a rotary switch is provided for switching between the light functions (1 to 6),
**characterised in that**
the operating device comprises a control unit that is suitable for evaluating the current switch position and the current speed of the vehicle and for carrying out the control according to the method of claim 1.

3. Operating device according to claim 2, which is designed as a rotary switch module (7).

4. Vehicle with an operating device according to one of claims 2 or 3.

## Revendications

1. Procédé de commande de différentes fonctions lumineuses (1 à 6) dans un véhicule, dans lequel les fonctions lumineuses (1 à 6) comprennent les fonctions « Arrêt » (1), « Auto » (2), « Feux de position » (3), « Feux de croisement » (4) et « Feux de croisement + Feux de brouillard » (4 avec 5 ou 6) et il peut être commuté manuellement entre les fonctions lumineuses (1 à 6) au moyen d'un commutateur rotatif, dans lequel la position de commutateur « Feux de position » (3) est agencée entre la position de commutateur « Auto » (2) et la position de commutateur « Feux de croisement » (4),
**caractérisé en ce que**
lorsque lors de la commutation manuelle de la fonction lumineuse actuelle « Auto » (2), dans laquelle les feux de croisement sont allumés automatiquement en fonction des conditions environnementales présentes, et les feux de croisement sont allumés, à la fonction lumineuse « Feux de position » (3), la vitesse actuelle du véhicule a dépassé une vitesse prédéterminée, les feux de croisement restent allumés et la position de commutateur « Feux de position » (3) est ignorée et autrement les feux de position sont activés.

2. Dispositif de commande pour la commande de fonctions lumineuses (1 à 6) dans un véhicule, dans lequel un commutateur rotatif est prévu pour la commutation des fonctions lumineuses (1 à 6),
**caractérisé en ce que**
le dispositif de commande présente un appareil de commande, qui est aménagé pour évaluer la position de commutateur actuelle et la vitesse actuelle du véhicule ainsi que pour effectuer la commande conformément au procédé selon la revendication 1.

3. Dispositif de commande selon la revendication 2, qui est réalisé en tant que module de commutateur rotatif (7).

4. Véhicule avec un dispositif de commande selon l'une quelconque des revendications 2 ou 3.
